(19) **Europäisches Patentamt / European Patent Office / Office européen des brevets**

(11) **EP 2 330 445 A1**

(12) **EUROPEAN PATENT APPLICATION**

(43) Date of publication:
08.06.2011 Bulletin 2011/23

(51) Int Cl.:
*G02B 5/02* (2006.01)    *G02B 5/30* (2006.01)
*G02B 1/04* (2006.01)

(21) Application number: 10191659.1

(22) Date of filing: 18.11.2010

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 19.11.2009 US 592139

(71) Applicant: SKC Haas Display Films Co., Ltd.
Choongchungnamdo (KR)

(72) Inventors:
• **Greener, Jehuda**
  **Rochester, NY 14618 (US)**
• **Zhou, Weijun**
  **Lake Jackson, TX 77566 (US)**
• **MI, Xiang-Dong**
  **Rochester, NY 14623 (US)**

(74) Representative: **Houghton, Mark Phillip**
**Patent Outsourcing Limited**
**1 King Street**
**Bakewell, Derbyshire DE45 1DZ (GB)**

(54) **Method of manufacturing a reflective polarizer**

(57)    The present invention provides a method for manufacturing a diffusely reflecting polarizer, comprising: extruding and stretching a film containing a first polymer having a birefringence of less than 0.02, with said first polymer being a substantially amorphous nano-composite material, and a second polymer, the first polymer being a major phase, and the second polymer being a dispersed minor phase, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, Tg, and refractive index and the stretch temperature and stretch ratio of the first and second polymers are selected to satisfy the equations:
(1) $R_{1d}$ is greater than $R_{1s}$; and
(2)

$$T_{2t}/(1-0.5(R_{1t}+R_{2t})) > 1.35.$$

EP 2 330 445 A1

**Description**

**FIELD OF THE INVENTION**

This invention relates to a method of manufacturing a diffusely reflecting polarizer comprising a film having a first polymer, with a second polymer dispersed therein, the first polymer being a substantially amorphous nano-composite and nearly isotropic material.

**BACKGROUND OF THE INVENTION**

Reflective polarizing films transmit light of one polarization and reflect light of the orthogonal polarization. They are useful in an LCD to enhance light efficiency. A variety of films have been disclosed to achieve the function of the reflective polarizing films, among which diffusely reflecting polarizers are more attractive because they may not need a diffuser in a LCD, thus reducing the complexity of the LCD. U.S. Patent Nos. 5,783,120 teach a diffusely-reflective polarizing film comprising a film containing an immiscible blend having a first continuous phase (also referred herein as the major phase, i.e., comprising more than 50 weight % of the blend) and a second dispersed phase (also referred herein as the minor phase, i.e., comprising less than 50 weight % of the blend), wherein the first phase has a birefringence of at least 0.05. The film is oriented, typically by stretching, in one or more directions. The size and shape of the dispersed phase particles, the volume fraction of the dispersed phase, the film thickness, and the amount of orientation are chosen to attain a desired degree of diffuse reflection and total transmission of electromagnetic radiation of a desired wavelength in the resulting film. Among 124 examples shown in Table 1 through Table 4, most of which include polyethylene naphthalate (PEN) as a major and birefringent phase, with polymethyl methacrylate (PMMA) (Example 1) or syndiotactic polystyrene (sPS) (other examples) as a minor phase, except for example numbers 6, 8, 10, 42-49, wherein PEN is a minor phase and sPS is a major phase. In all of these 124 examples the major phase comprises a semicrystalline polymer.

Examples 6, 8, and 10 in Table 1 showed that overall transmittance and reflectivity were not satisfactory. A figure of merit (FOM) defined as

$FOM = T_{perp}/(1- 0.5 * (R_{perp} + R_{para}))$was smaller than 1.27. Examples 42-49 in Table 2 did not have the transmittance and reflectivity data, and were not discussed at all.

(Table 1 of U.S. Patent Nos. 5,783,120)

|   | Fraction sPS | Tperp | T_para | R_Perp | R_para | FOM |
|---|---|---|---|---|---|---|
| 6 | 0.75 | 80.2 | 58.4 | 19.4 | 40 | 1.14 |
| 8 | 0.75 | 76 | 41 | 23.8 | 55.6 | 1.26 |
| 10 | 0.75 | 76.8 | 48.9 | 22.4 | 49.6 | 1.20 |

Films filled with inorganic inclusions with different characteristics can provide unique optical transmission and reflective properties. However, optical films made from polymers filled with inorganic inclusions suffer from a variety of problems. Typically, adhesion between the inorganic particles and the polymer matrix is poor. Consequently, the optical properties of the film decline when stress or strain is applied across the matrix, both because the bond between the matrix and the inclusions is compromised, and because the rigid inorganic inclusions may be fractured. Furthermore, alignment of inorganic inclusions requires process steps and considerations that complicate manufacturing.

Other films consist of a clear light-transmitting continuous polymer matrix, with droplets of light modulating liquid crystals dispersed within. Stretching of the material reportedly results in a distortion of the liquid crystal droplet from a spherical to an ellipsoidal shape, with the long axis of the ellipsoid parallel to the direction of stretch.

There remains a need for an improved diffusely-reflecting polarizer comprising a film having a continuous phase and a disperse phase that avoids the limitations of the prior art. The improved reflecting polarizer should have a major phase that is a relatively inexpensive material and that is amorphous, rather than crystalline or semicrystalline, to minimize haze, so the refractive index mismatch between the two phases along the material's three dimensional axes can be conveniently and permanently manipulated to achieve desirable degrees of diffuse and specular reflection and transmission. The film must also be desirably stable with respect to stress, strain, temperature differences, moisture, and electric and magnetic fields, and wherein the film has an insignificant level of iridescence. These needs are met by U.S. Patent No. 7,583,440 ('440 patent). However, only a very limited number of materials are available for making the diffusely reflecting polarizer according to the '440 patent. As such, optical performance of the diffusely reflecting polarizer may be compromised due to the limited possibility to tune the optical properties, especially refractive index and birefringence. Therefore, there remains a need for an improved diffusely-reflecting polarizer comprising a film having a major phase and a dispersed minor phase, the major phase having a controllable refractive index to avoid the limitations of known reflective polarizers.

## SUMMARY OF THE INVENTION

The present invention provides a method for manufacturing a diffusely reflecting polarizer, comprising: extruding and stretching a film containing a first polymer having a birefringence of less than 0.02, with said first polymer being a substantially amorphous nano-composite material, and a second polymer, the first polymer being a major phase, and the second polymer being a dispersed minor phase, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, Tg, and refractive index and the stretch temperature and stretch ratio of the first and second polymers are selected to satisfy the equations:

$$(1) \qquad R_{1d} \text{ is greater than } R_{1s};$$

and

$$(2) \qquad T_{2t}/(1-0.5(R_{1t}+R_{2t}))>1.35.$$

The present invention further provides a method for manufacturing a diffusely reflecting polarizer, comprising: providing a composition comprising a first polymer and a second polymer, the first polymer being a cyclic block copolymer and having a birefringence of less than about 0.02, the first polymer being a major phase and the second polymer being a dispersed minor phase, wherein the index of refraction of the first polymer is less adjustable by orientation than the second polymer; and stretching the composition at selected temperature ranges and selected stretching ratios until the diffuse reflectivity of the composition along at least one axis for at least one polarization of electromagnetic radiation is greater than about 50%.

## BRIEF DESCRIPTION OF THE DRAWINGS

FIG. 1 is a schematic perspective drawing illustrating a diffusely reflecting polarizer made in accordance with the present invention, in which the polarizer has a core layer that contains a dispersed minor phase that is highly birefringent and a major phase that is nearly or completely optically isotropic, with the core layer being disposed between two outer (protective) layers;

FIG. 2 is a schematic cross-section of the diffusely reflecting polarizer layer comprising the first polymer nano-composite major phase and the second polymer minor phase dispersed therein, the nano-composite major phase containing a continuous amorphous phase and the nano-scale domains dispersed therein;

FIG. 3 is a schematic perspective drawing illustrating the diffusely reflecting polarizer shown in FIG. 1 with the two protective layers removed; and

FIG. 4 is a schematic perspective drawing illustrating a diffusely reflecting polarizer with two protective layers formed of materials which are neither the major phase material nor the dispersed minor phase material.

## DETAILED DESCRIPTION OF THE INVENTION

Definitions:

The terms "specular reflectivity", "specular reflection", or "specular reflectance" $R_s$ refer to the reflectance of light rays into an emergent cone with a vertex angle of 16 degrees centered around the specular angle. The terms "diffuse reflectivity", "diffuse reflection", or "diffuse reflectance" $R_d$ refer to the reflection of rays that are outside the specular cone defined above. The terms "total reflectivity", "total reflectance", or "total reflection" $R_t$ refer to the combined reflectance of all light from a surface. Thus, total reflection is the sum of specular and diffuse reflection.

Similarly, the terms "specular transmission" and "specular transmittance" $T_s$ are used herein in reference to the transmission of rays into an emergent cone with a vertex angle of 16 degrees centered around the specular direction.

The terms "diffuse transmission" and "diffuse transmittance" $T_d$ are used herein in reference to the transmission of all rays that are outside the specular cone defined above. The terms "total transmission" or "total transmittance" $T_t$ refer to the combined transmission of all light through an optical body. Thus, total transmission is the sum of specular and diffuse transmission. In general, each diffusely reflecting polarizer is characterized by a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, along a first axis for one polarization state of electromagnetic radiation, and a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$ along a second axis for another polarization state of electromagnetic radiation. The first axis and second axis are perpendicular to each other and each is perpendicular to the thickness direction of the diffusely reflecting polarizer. Without the loss of generality, the first axis and the second axis are chosen such as the total reflectivity along the first axis is greater than that along the second axis (i.e., $R_{1t} > R_{2t}$) and the total transmittance along the first axis is less than that along the second axis (i.e., $T_{1t} < T_{2t}$).

Diffuse reflectivity, specular reflectivity, total reflectivity, diffuse transmittance, specular transmittance, total transmittance, as used herein, generally have the same meanings as defined in U. S. Patent No. 5,783,120.

Figure of Merit (FOM)

The diffusely reflecting polarizers made according to the present invention all satisfy

$$R_{1d} > R_{1s} \qquad\qquad \text{Equation (1)}$$

$$FOM \equiv T_{2t}/(1-0.5(R_{1t}+R_{2t})) > 1.35 \qquad\qquad \text{Equation (2)}$$

Equation (1) indicates that the reflecting polarizers of the present invention are more diffusive than specular in reflection. It is noted that a wire grid polarizer (e.g., as available from Moxtek, Inc., Orem, Utah), a multilayer interference-based polarizer such as Vikuiti™ Dual Brightness Enhancement Film, manufactured by 3M, St. Paul, Minn, or a cholesteric liquid crystal based reflective polarizer are more specular than diffusive.

Equation (2) defines the figure of merit for the diffusively reflecting polarizer. This equation states that a film is defined as a reflective polarizer if its figure of merit FOM is greater than 1.35. For polarization recycling, what matters is the total reflection and total transmission, so only total reflection and total transmission are used to compute the FOM for the purpose of ranking different reflective polarizers. The figure of merit describes the total light throughput of a reflective polarizer and an absorptive polarizer such as a back polarizer used in an LCD, and is essentially the same as

equation (1) $T1 = \dfrac{T_p}{1 - 0.5(R_s + R_p)R}$ which applies to LCD systems where the light recycling is effected using a diffusive reflector or its equivalent. It is noted that R accounts for the reflectivity of the recycling reflective film, or the efficiency associated with each light recycling. In an ideal case, R is equal to 1, which means that there is no light loss in the light recycling. When R is less than 1, there is some light loss in the light recycling path. It is also noted that other forms of figure of merit can be used, however, the relative ranking of the reflective polarizers remain the same. For the purpose of quantifying and ranking the performance of a reflective polarizer, $FOM \equiv T_{2t}/(1-0.5(R_{1t}+R_{2t}))$ will be used in this application. The extinction ratio $T_{2t}/T_{1t}$ or $R_{1t}/R_{2t}$ may not be proper to describe a reflective polarizer because a reflective polarizer having a higher $T_{2t}/T_{1t}$ or $R_{1t}/R_{2t}$ may not necessarily perform better than one having a lower extinction ratio. For an ideal conventional absorptive polarizer, $T_{2t}=1$, $R_{1t}=R_{2t}=0$, so FOM=1. For an ideal reflective polarizer, $T_{2t}=1$, $R_{1t}=1$, and $R_{2t}=0$, so FOM=2. The diffusive reflecting polarizers, as disclosed in example numbers 6, 8, 10 of U.S. Patent No. 5,783,120 having sPS as the major phase had the *FOM* < 1.27 , which were not satisfactory.

By tuning the optical properties of the first and second polymers, the diffusively reflecting polarizers according to the present invention could have FOM values greater than 1.35, more preferably greater than 1.5. Though some diffusive reflecting polarizers as disclosed in U.S. Patent No. 5,783,120 had a FOM greater than 1.35, they were composed of a major phase with a birefringence of greater than 0.05 and a dispersed phase with lower birefringence.

Amorphous and semi-crystalline polymers

A polymer that does not produce crystallization (exothermic) or melting (endothermic) peaks during a differential scanning calorimetry (DSC) test over a temperature ranging from below its glass transition temperature (Tg) to $T_g$ + 300°C is said to be amorphous. Conversely, if such peaks are recorded in a DSC test the polymeric material is semi-crystalline. The DSC test is well known to those skilled in the art.

Substantially amorphous, nano-composite material

Throughout this application, substantially amorphous nano-composite material refers to bi- or multi-phasic amorphous materials containing at least a continuous amorphous phase as defined above and at least one additional phase, the additional phase being dispersed into small domains within the continuous amorphous phase, the domains having characteristic dimensions in at least one dimension smaller than the wavelength of light, i.e., nano-scale domains, such that these domains do not contribute to scattering of light passing through the material, but can be used to tune the effective optical properties (refractive index and birefringence) of the material. The nano-scale dispersed materials may be amorphous or crystalline, organic or inorganic. These domains may also be spherical or non-spherical in shape.

In the present invention, a semi-crystalline polymer is not well suited for use in the major phase of the diffusely reflective film because of its propensity to thermally crystallize during stretching at elevated temperatures and thus produce an undesirable level of haze. This issue was overcome in the '440 patent, wherein the use of an amorphous polymer in the major phase was proposed. But, unlike the '440 patent, the major phase in the present invention comprises a substantially amorphous nano-composite material rather than a purely amorphous one. This approach allows better control of the optical properties of the major phase in the diffusely reflective film without loss of light transmittance by scattering.

Immiscible and compatible polymer blends

Polymers that are thermodynamically incompatible when mixed together in the melt state are said to be immiscible. Such polymers will separate into distinct phases having coarse morphology and create an inhomogeneous blend, with each phase retaining the distinct characteristics of the polymer components and exhibiting poor adhesion between the phases. Compatible blends on the other hand exhibit fine phase morphology and good adhesion between the polymer domains comprising the blend.

Major, minor, continuous, discrete and dispersed phases

Major and minor phases are thermodynamically distinct phases in a mixture with the phases having different weight fractions. A major phase has a weight fraction greater than 50%, while a minor phase has a weight fraction of less than 50%. Similarly, a continuous phase in a mixture is a thermodynamically distinct phase having a volume fraction greater than 50% and a discrete phase in a mixture is a thermodynamically distinct phase having a volume fraction less than 50%. A dispersed phase is either a minor phase or a phase having a volume fraction less than 50%.

Birefringence, weakly birefringent, and nearly optically isotropic

The quantity (nx-ny) is referred to as in-plane birefringence, $\Delta n_{in}$, where nx and ny are indices of refraction in the direction of x and y; x is taken as the direction of maximum index of refraction in the x-y plane and y direction is taken perpendicular to it; the x-y plane is parallel to the surface plane of the layer; and d is a thickness of the layer in the z-direction. The value of $\Delta n_{in}$ is typically given at a wavelength $\lambda$= 550 nm.

The quantity [nz-(nx+ny)/2] is referred to as out-of-plane birefringence, $\Delta n_{th}$, where nz is the index of refraction in the z-direction. If nz>(nx+ny)/2, $\Delta n_{th}$ is positive (positive birefringence), and if nz<(nx+ny)/2, $\Delta n_{th}$ is negative (negative birefringence). The value of $\Delta n_{th}$ is typically given at $\lambda$=550 nm.

As used herein, "nearly optically isotropic" or "weakly birefringent" means that after stretching, the material has a birefringence less than 0.02.

The present invention concerns a diffusely reflecting polarizer comprising a first polymer, with the first polymer being a substantially amorphous nano-composite material forming a major phase and a second polymer forming a minor phase, the major phase being nearly isotropic, and a method of making such a diffusely reflecting polarizer is described herein below and by referring to the drawings. The diffusely reflecting polarizers of the invention are effectively employed in a display device such as an LCD to enhance light efficiency.

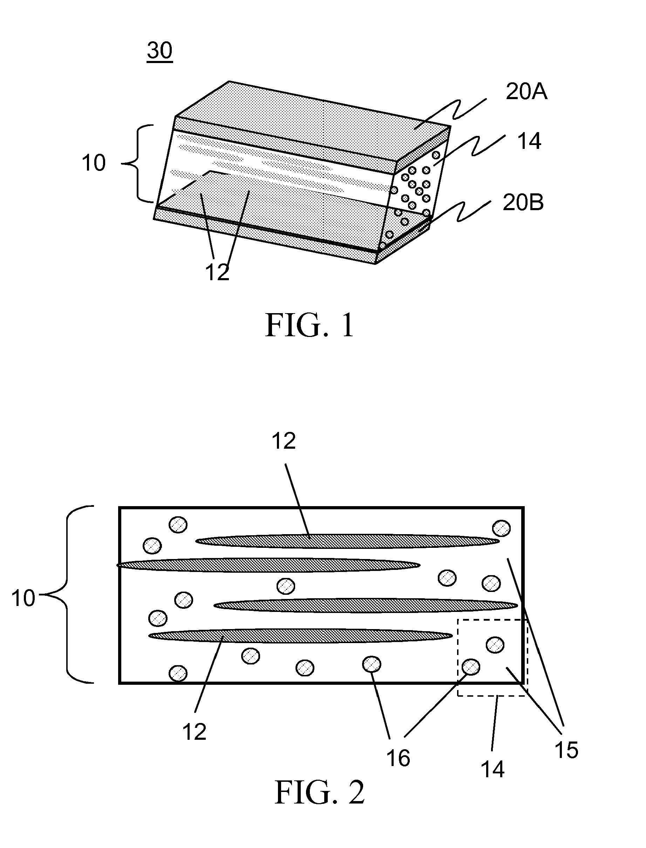

Referring now to Figures 1 and 2, the diffusely reflecting polarizer of the present invention 30 comprises a film 10 comprising an immiscible blend having a first polymeric phase 14 that is a major phase, with the said first polymer being a substantially amorphous nano-composite material and having a birefringence of less than about 0.02, and a second polymeric phase 12 that is dispersed within the first polymer major phase. The first polymer major phase 14 is a nano-composite further comprising an amorphous continuous phase 15 and an additional phase, with the additional phase dispersed into nano-scale domains 16 within the continuous phase 15. The dispersed domains 16 have characteristic dimensions smaller than the wavelength of light in at least one dimension such that these domains do not contribute to scattering of light passing through the first polymer major phase 14. They, however, are capable of tuning the effective refractive index of the first polymer major phase 14. These domains are not drawn to scale in Figure 2. The second polymer is typically, but not exclusively, semi-crystalline, the said dispersed minor phase 12, whose index of refraction differs from said major phase 14 by more than about 0.05 along a first axis and by less than about 0.05 along a second axis orthogonal to said first axis; wherein the diffuse reflectivity of said first and second phases taken together along at least one axis for at least one polarization state of electromagnetic radiation is at least about 50%. In general, the size of the nano-scale domains 16 is at least 10 times smaller than the minor phase 12 in at least one dimension.

Optionally, the diffusely reflective polarizer 30 may comprise additional layers (protective layers or "skin" layers 20A and 20B are illustrated in Figure 1 for example), these additional layers may be employed to facilitate stretching of the multi-phasic composite film or to improve one or more physical, chemical, or thermal properties of the reflective polarizer or to provide physical protection to the core layer.

The concentration of the major phase is at least 51% by weight while the concentration of the dispersed minor phase is less than 50% by weight of the total material in the film 10. Preferably the major phase is at least 60% by weight and the dispersed minor phase is less than 40% by weight.

The first polymer major phase may comprise a single polymer or two or more miscible polymers in addition to the dispersed nano-scale domains. The second polymeric phase that is the dispersed minor phase may also comprise a single polymer or two or more miscible polymers. Typically, each of the two phases comprises only a single polymer. However, a blend of two or more miscible polymers may be effectively employed in either phase in order to optimize or modify various properties such as melt viscosity, Tg, physical properties, thermal properties, refractive index, and the like.

The one or more polymers comprising the major phase are substantially amorphous nano-composite, transmissive and weakly birefringent. The one or more polymers comprising the dispersed minor phase are transmissive and highly birefringent and typically, but not exclusively, semi-crystalline. Low birefringence values in the first polymer are achieved by selecting polymers that have very low stress-optical coefficients, by dispersing nano-scale materials that lower the stress-optical coefficient of the matrix and/or by stretching the film at a temperature ($T_s$) well above the glass transition temperature of the polymers comprising the major phase, $T_s > T_{g,1} + 30°C$ (where $T_{g,1}$ is the glass transition temperature of the major phase), such that the molecular orientation is allowed to relax sufficiently to reduce the level of in-plane birefringence to below 0.02, preferably below 0.01, and more preferably below 0.005, as the material solidifies after stretching. Examples of polymers for use in the substantially amorphous nano-composite major phase include cyclic block copolymers (CBC) produced by substantially fully hydrogenating anionically polymerized vinyl aromatic-conjugated diene block copolymers using a porous silica supported metal heterogeneous catalyst.

The vinyl aromatic/conjugated diene block copolymer, prior to hydrogenation, may have any known architecture, including distinct block, tapered block, and radial block. Distinct block structures that include alternating vinyl aromatic blocks and conjugated diene blocks yield preferred results, especially when such block structures yield triblock copolymers or pentablock copolymers, in each case with vinyl aromatic end blocks. Pentablock copolymers constitute particularly preferred block copolymers. The vinyl aromatic blocks may have the same or different molecular weights as desired. Similarly, the conjugated diene blocks may have the same or different molecular weights.

Typical vinyl aromatic monomers include styrene, alpha-methylstyrene, all isomers of vinyl toluene (especially paravinyl toluene), all isomers of ethyl styrene, propyl styrene, butyl styrene, vinyl biphenyl, vinyl naphthalene, vinyl anthracene and the like, or mixtures thereof. The block copolymers can contain one or more than one polymerized vinyl aromatic monomer in each vinyl aromatic block. The vinyl aromatic blocks preferably comprise styrene, more preferably consist essentially of styrene, and still more preferably consist of styrene.

The conjugated diene blocks may comprise any monomer that has two conjugated double bonds. Illustrative, but non-limiting, examples of conjugated diene monomers include butadiene, 2-methyl-1, 3-butadiene, 2-methyl-1,3-pentadiene, isoprene, or mixtures thereof. As with the vinyl aromatic blocks, the block copolymers may contain one (for example, butadiene or isoprene) or more than one (for example, both butadiene and isoprene). Preferred conjugated diene polymer blocks in the block copolymers may, prior to hydrogenation, comprise polybutadiene blocks, polyisoprene blocks or mixed polybutadiene/polyisoprene blocks. While a block copolymer may, prior to hydrogenation, include one polybutadiene block and one polyisoprene block, preferred results follow with block copolymers that, prior to hydrogenation, have conjugated diene blocks that are solely polybutadiene blocks or solely polyisoprene blocks. A preference for a single diene monomer stems primarily from manufacturing simplicity. In both cases, the microstructure of diene incorporation into the polymer backbone can be controlled to achieve a CBC polymer that is substantially or fully amorphous.

Illustrative preferred vinyl aromatic/conjugated diene block copolymers wherein each vinyl aromatic block comprises styrene (S) and each conjugated diene block comprises butadiene (B) or isoprene (I) include SBS and SIS triblock copolymers and SBSBS and SISIS pentablock copolymers. While the block copolymer may be a triblock copolymer or, more preferably a pentablock copolymer, the block copolymer may be a multiblock that has one or more additional vinyl aromatic polymer blocks, one or more additional conjugated diene polymer blocks or both one or more additional vinyl aromatic polymer blocks and one or more additional conjugated diene polymer blocks, or a star block copolymer (for example, that produced via coupling). One may use a blend of two block copolymers (for example, two triblock copolymers, two pentablock copolymers or one triblock copolymer and one pentablock copolymer) if desired. One may also use two different diene monomers within a single block, which would provide a structure that may be shown as, for example, SIBS. These representative structures illustrate, but do not limit, block copolymers that may be suitable for use as the first polymer in an embodiment of this invention.

"Substantially fully hydrogenated" means that at least 95 percent of the double bonds present in vinyl aromatic blocks prior to hydrogenation are hydrogenated or saturated and at least 97 percent of double bonds present in diene blocks prior to hydrogenation are hydrogenated or saturated. By varying the relative length of the blocks, total molecular weight, block architecture (e.g., diblock, triblock, pentablock, multi-armed radial block, etc) and process conditions, various types of nanostructure morphology can be obtained from this block copolymer and thereby modify the optical properties of the major phase. Specific, non-limiting examples include lamellar morphology, bicontinuous gyroid morphology, cylinder morphology, and spherical morphology, etc. The morphology and microphase separation behavior of a block copolymer is well known and may be found, for example, in The Physics of Block Copolymers by Ian Hamley, Oxford University Press, 1998. Particularly preferred CBC polymers are those having an amount of styrene from 55 - 80 wt% and an amount of conjugated diene from 20 - 45 wt%, prior to hydrogenation.

Amorphous, highly transmissive polymers blended with well dispersed inorganic nano-scale particles is another example of a substantially amorphous nano-composite material.

The CBC polymers in the major phase can be blended with a non-block polymer or copolymer with one block. Illustrative non-block polymers and copolymers include, but are not limited to, hydrogenated vinyl aromatic homopolymers or random copolymers, cyclic olefin polymers (COPs), cyclic olefin copolymers (COCs), acrylic polymers, acrylic copolymers or mixtures thereof. The non-block polymer or copolymer, when blended with a CBC material, is miscible with, and sequestered within, one phase of the block copolymer.

COCs and COPs are especially interesting as a miscible blend component for the major phase of this invention. These cyclic olefin materials are remarkably glass-like organic material. COC materials have a luminous transmittance of 91 % in the visible region. In addition to their high transmittance and high Abbé number (58), COC resins have very low haze and yellowness, ensuring minimal light loss by scattering or absorption. As amorphous polymers with low optical anisotropy, they also have inherently low birefringence and a very low stress-optic coefficient - as low or even lower than that of PMMA - so that they retain low birefringence under load. Grades of COC resins are available with heat deflection temperatures as high as 170°C (338°F) making them tolerant of short term exposures to quite high temperatures. COC resins provide excellent moisture control. It has roughly double the moisture barrier of high-density polyethylene (HDPE) and five times the moisture barrier of low-density polyethylene (LDPE). COC resins are environmentally-friendly and permit easy disposal. On combustion it forms no toxic gases but only water and carbon dioxide.

High values of birefringence in the minor phase are achieved by utilizing materials with relatively high stress-optical coefficient and by stretching the film at a temperature $T_s$ such that: $T_{g,2} < T_s < T_{g,2} + 30°C$ (where $T_{g,2}$ is the Tg of the disperse minor phase). Examples of polymers suitable for use in the minor phase include, but are not limited to, polyesters, polyamides, and polyester-amides and other classes of semicrystalline polymers. Specific non-limiting examples include poly(ethylene terephthalate) (PET), poly(ethylene naphthalate) (PEN), and polyesters containing the cyclohexyl dimethylene moiety.

In one embodiment of the invention, the minor dispersed phase comprises a compatible polyester blend and a means of substantially inhibiting a transesterification reaction. The polyester blend may comprise one or more polyesters or at least one polyester and a polycarbonate. Transesterification inhibitors are well known in the polymer processing industry and generally comprise a phosphorous compound. Suitable transesterification inhibitors for use in the present invention include, but are not limited to, organophosphites such as triphenyl phosphite, bis(2,4-di-t-butylphenyl)pentaerythritol diphosphite, di-n-octadecyl phosphite, tris(2,4-di-t-butylphenyl)phosphite, tris(monononylphenyl)phosphite, trimethyl phosphite, triethyl phosphite, and others.

The diffusely reflecting polarizer of the invention may be used in combination with one or more other optical films that are typically employed in display devices such as LCD, including, for example, films that provide the function of antireflection, ambient light suppression, illumination enhancement, light collimation, light directing, light diffusion, light spreading, viewing angle enhancement, polarization, and the like

The diffusely reflecting polarizer of the present invention is produced by a multi-step process. First, all the components comprising the first major phase and the second dispersed phase are dry-blended together at a desired composition. The blending may comprise additional melt blending steps involving a twin-screw extruder or a static mixer. The mixture is fed into an extruder and is then cast through a sheeting die or a multi-manifold die onto a roll stack and a calender. The cast sheet must undergo a stretching step in order to induce the desired birefringence level in the dispersed minor phase of the film. The stretching, to orient the composition, can be done in line right after the sheet extrusion, or carried out in a separate step off-line. In either case the sheet is first heated to a temperature $T_s$, such that:

$T_{g,2} < T_s < T_{g,2} + 30°C$ and is then stretched uniaxially, along the machine direction or along the cross-machine direction, or both, to produce the desired level of in-plane birefringence in the dispersed minor phase. Thus, the stretching temperature must meet the following conditions:

$$T_{g,1} \quad < \quad T_s$$

$$T_{g,2} \quad < \quad T_s \quad < \quad T_{g,2} + 30°C$$

Where $T_{g,1}$ is the glass transition temperature of the substantially amorphous nano-composite major phase and $T_{g,2}$ is the glass transition temperature of the second polymer comprising the minor phase.

If the major phase has a high stress-optical coefficient then $T_s$ - $T_{g,1}$ > 30°C , i.e., the stretching temperature must be relatively high compared to the glass transition temperature of the major phase in order to achieve low birefringence in the major phase (that is, the birefringence of the major phase must be less than 0.02 after stretching and solidification).

Typical extension or stretch ratios range from 3X to 7X although a wider range of stretch ratios may be considered. Stretching can be done using a number of methods well known to those skilled in the art. In some cases the edges of the stretched film can be restrained during the stretching step although unrestrained stretch is preferred. Compared to the approach of U. S. Patent No. 5,783,120, the present invention provides a wide range of options and materials with the possibility of lower cost and superior optical performance without the limitations defined in the prior art.

After stretching, the total thickness of the reflecting polarizer of the invention is expected to vary from 25 to 1000 microns. Typically, a total thickness from about 100 to 500 microns is sufficient to achieve the desired degree of polarization recycling and dimensional stability.

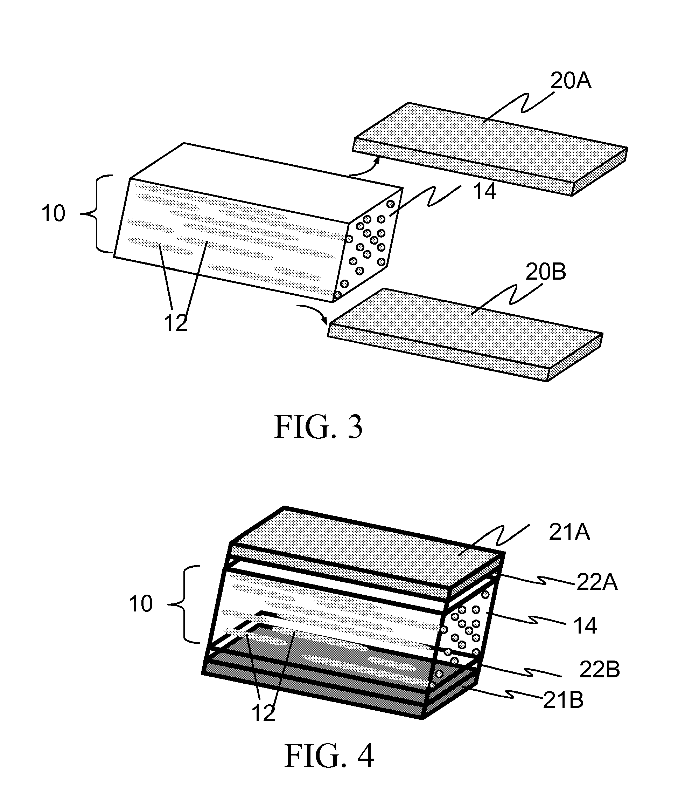

As mentioned previously, in one embodiment of the invention the reflective polarizer 30 is produced with protective layers 20A and 20B on each side of film10, see Figure 1. The protective layers are typically co-extruded and co-stretched with the film 10 and may comprise a material similar to and possibly identical to the composition of the dispersed minor phase. The stretched sheet is finally cooled down and wound on a roll. The protective layers 20A and 20B can remain permanently attached to the film 10 or peeled off at some time before the reflective polarizer is assembled in the LC display. The peeling of the protective layers is illustrated in Figure 3 and requires that they are held by weak adhesion forces to film 10. This level of adhesion can be controlled by the addition of suitable surface active agents, polymeric surfactants, plasticizers and various other addenda. Alternatively the adhesion between the protective layers and the film 10 can be enhanced by addition of tie layers as shown in Figure 4 wherein layers 22A and 22B represent tie layers disposed between film 10 and corresponding protective layers 21A and 21B. Suitable materials for use in the tie layers should have some compatibility or affinity for the continuous polymeric phases employed in the film 10 and the protective layers 21A and 21B. For one embodiment in which the major phase comprises a CBC polymer and the protective layers comprise a polyester, suitable tie layer materials include ethylene-vinyl acetate polymers and ethylene-acrylate polymers.

**Claims**

1.   A method for manufacturing a diffusely reflecting polarizer, comprising: extruding and stretching a film containing a first polymer having a birefringence of less than 0.02, with said first polymer being a substantially amorphous nano-composite material, and a second polymer, the first polymer being a major phase, and the second polymer being a dispersed minor phase, wherein said first and second polymers taken together along a first axis for one polarization state of electromagnetic radiation exhibit a diffuse reflectivity $R_{1d}$, a specular reflectivity $R_{1s}$, a total reflectivity $R_{1t}$, a diffuse transmittance $T_{1d}$, a specular transmittance $T_{1s}$, and a total transmittance $T_{1t}$, and along a second axis for another polarization state of electromagnetic radiation exhibit a diffuse reflectivity $R_{2d}$, a specular reflectivity $R_{2s}$, a total reflectivity $R_{2t}$, a diffuse transmittance $T_{2d}$, a specular transmittance $T_{2s}$, and a total transmittance $T_{2t}$, the said first and second axes being orthogonal, wherein the parameters of composition, Tg, and refractive index and the stretch temperature and stretch ratio of the first and second polymers are selected to satisfy the equations:

$$(1) \qquad R_{1d} \text{ is greater than } R_{1s};$$

and

$$(2) \qquad T_{2t}/(1-0.5(R_{1t}+R_{2t}))>1.35.$$

2. The method of claim 1 wherein the stretch temperature, $T_s$, satisfies the conditions:

$$(1) \qquad T_{g,1} \ < \ T_s$$

$$(2) \qquad T_{g,2} \ < \ T_s \ < \ T_{g,2} + 30°C$$

wherein $T_{g,1}$ is the glass transition temperature of the substantially amorphous nano-composite first polymer and $T_{g,2}$ is the glass transition temperature of the second polymer.

3. The method of claim 1 wherein the film is stretched to a total thickness of between 25 to 1000 microns.

4. The method of claim 1, wherein the first polymer is a cyclic block copolymer.

5. The method of claim 4, wherein the cyclic block copolymer is made by substantially fully hydrogenating anionically polymerized vinyl aromatic-conjugated diene block copolymer.

6. The method of claim 5, wherein the vinyl aromatic block copolymer comprises styrene, alpha-methylstyrene, all isomers of vinyl toluene (especially paravinyl toluene), all isomers of ethyl styrene, propyl styrene, butyl styrene, vinyl biphenyl, vinyl naphthalene, vinyl anthracene and the like, or mixtures thereof.

7. The method of claim 5, wherein the conjugated diene block copolymers include butadiene, 2-methyl-1, 3-butadiene, 2-methyl-1,3-pentadiene, isoprene, or mixtures thereof.

8. The method of claim 1, wherein the additional phase dispersed within the first polymer comprises nano-scale particles.

9. The method of claim 1, wherein the first polymer comprises a miscible blend of a cyclic block copolymer and another non-block polymer, including hydrogenated vinyl aromatic homopolymers or random copolymers, cyclic olefin polymers, cyclic olefin copolymers, acrylic polymers, acrylic copolymers or mixtures thereof.

10. The method of claim 1, wherein the second polymer comprises a polyester.

11. The method of claim 1, wherein the second polymer comprises PET or PEN.

12. The method of claim 1, wherein the second polymer comprises a miscible polyester blend of two or more polymers and a transesterification inhibitor.

13. The method of claim 1, wherein protective layers are disposed on both sides of the reflective polarizer film by co-extrusion.

14. A method for manufacturing a diffusely reflecting polarizer, comprising: providing a composition comprising a first polymer and a second polymer, the first polymer being a cyclic block copolymer and having a birefringence of less than about 0.02, the first polymer being a major phase and the second polymer being a dispersed minor phase, wherein the index of refraction of the first polymer is less adjustable by orientation than the second polymer; and stretching the composition at selected temperature ranges and selected stretching ratios until the diffuse reflectivity of the composition along at least one axis for at least one polarization of electromagnetic radiation is greater than about 50%.

<u>30</u>

20A

14

10

20B

12

## FIG. 1

12

10

12

16

14

15

## FIG. 2

FIG. 3

FIG. 4

Europäisches
Patentamt

European
Patent Office

Office européen
des brevets

# EUROPEAN SEARCH REPORT

Application Number

EP 10 19 1659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/279740 A1 (MI XIANG-DONG [US] ET AL) 6 December 2007 (2007-12-06) | 1-4,8, 10-14 | INV. G02B5/02 G02B5/30 G02B1/04 |
| Y | * paragraph [0025] * <br> * paragraph [0035] - paragraph [0038] * <br> * paragraph [0040] * <br> * figure 1 * | 5-9 | |
| Y | WO 2009/137278 A1 (DOW GLOBAL TECHNOLOGIES INC [US]; ZHOU WEIJUN [US]; HAHN STEPHEN [US];) 12 November 2009 (2009-11-12) <br> * page 4, line 13 - line 22 * <br> * page 6, line 3 - page 8, line 21 * | 5-7,9 | |
| X | US 2007/281143 A1 (AYLWARD PETER T [US] ET AL) 6 December 2007 (2007-12-06) <br> * paragraph [0002] * <br> * paragraph [0055] * <br> * paragraph [0089] * | 1,11 | |
| Y | NAKAYAMA N ET AL: "Preparation and characterization of TiO2 and polymer nanocomposite films with high refractive index", JOURNAL OF APPLIED POLYMER SCIENCE JOHN WILEY & SONS INC. USA, vol. 105, no. 6, 9 June 2007 (2007-06-09), pages 3662-3672, XP002617479, ISSN: 0021-8995, DOI: DOI:10.1002/APP.26451 <br> * abstract * | 8 | TECHNICAL FIELDS SEARCHED (IPC) <br><br> G02B |

The present search report has been drawn up for all claims

| Place of search | Date of completion of the search | Examiner |
|---|---|---|
| Munich | 26 January 2011 | von Hentig, Roger |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 19 1659

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2011

| Patent document cited in search report | | Publication date | Patent family member(s) | | Publication date |
|---|---|---|---|---|---|
| US 2007279740 | A1 | 06-12-2007 | EP 2033024 A2 | | 11-03-2009 |
| | | | JP 2009540362 T | | 19-11-2009 |
| | | | KR 20090042210 A | | 29-04-2009 |
| | | | US 2009323184 A1 | | 31-12-2009 |
| | | | WO 2007145811 A2 | | 21-12-2007 |
| WO 2009137278 | A1 | 12-11-2009 | EP 2276780 A1 | | 26-01-2011 |
| US 2007281143 | A1 | 06-12-2007 | WO 2007145813 A1 | | 21-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5783120 A
- US 7583440 B

**Non-patent literature cited in the description**

- The Physics of Block Copolymers by Ian Hamley. Oxford University Press, 1998